# EUROPEAN PATENT SPECIFICATION

(11) **EP 0 358 669 B1**
(45) Date of publication and mention of the grant of the patent: **10.08.1994**
(21) Application number: 88903908.7
(22) Date of filing: 09.05.1988
(51) Int. Cl.: H01B 7/34

(54) **ELECTRICAL WIRE AND CABLE**
ELEKTRISCHE KABEL UND DRÄHTE
FIL ET CABLE ELECTRIQUES

(30) Priority: 08.05.1987 GB 8710927
(43) Date of publication of application: 21.03.1990
(73) Proprietor: RAYCHEM LIMITED, London, EC4 1NL (GB)
(72) Inventor: SMITH, Timothy, Stephen, Trowbridge Wiltshire BA14 6BY (GB); COLLETT, Darren, John, Swindon Wiltshire SN5 8NG (GB); GENTILCORE, Giovanni, Swindon Wiltshire (GB)
(74) Representative: Dlugosz, Anthony Charles
(86) International application number: GB8800362
(87) International publication number: WO8809041

(56) References cited:
- EP-A- 0 221 449
- AU-A- 6 396 786
- GB-A- 1 479 083
- GB-A- 2 163 167
- "The History of Electric Wires and Cables", R.M. Black, publ. Peter Peregrinns, 1983, pp. 268-272

## Description

This invention relates to transmission lines, for example electrical wire and cable, optical fibres or the like.

Documents GB-A-2163162 and AU-A-6396786 (see also EP-A-0221449 published on 13/05/87) disclose transmission lines having a layer of insulating or jacketing material that is formed from a composition including magnesium hydroxide.

The present invention provides a transmission line of the above type characterised in that the component comprises
(a) polytetramethylene teraphthalate containing polymers and
(b) from 10 to 30% weight based on the total weight of the composition of magnesium hydroxide, the magnesium hydroxide having a specific surface area A and a weight average particle size S such that the ratio of the specific surface area to the average particle size (A/S) is at least 8 x 10⁹ mkg⁻¹.

We have observed that in the above polymer systems, the ability of the magnesium hydroxide to suppress the evolution of smoke when the line is subjected to a fire is markedly improved as the surface area/particle size ratio is increased to values above 8 x 10⁹ mkg⁻¹.
Preferably the surface area/particle size ratio is at least 1.0 x 10¹⁰ more preferably 1.1 x 10¹⁰, and especially at least 1.2 x 10¹⁰ mkg⁻¹. The reason for this effect is not understood. The effect does not appear to depend on other characteristics of the magnesium hydroxide such as the specific surface area or particle size when taken alone, the method of manufacture or the purity of the material.

The magnesium hydroxide preferably has a weight average particle size in the range of from 0.1 to 20, preferably 0.3 to 6 micrometres as measured by a photosedimentation method. In addition or alternatively, the magnesium hydroxide has a specific surface area in the range of 1000 to 100,000, preferably 5000 to 50,000 m²kg⁻¹.

The transmission line according to the invention may for example comprise an electrical wire, an electrical cable in which the cable jacket is provided with the composition described herein, a jacketed coaxial cable or a waveguide for very high frequency transmission e.g. an optical waveguide. The insulation contains from 10 to 30% by weight magnesium hydroxide since quantities significantly below 10% will not have a sufficiently pronounced smoke suppression effect, while it may be difficult and unnecessary to incorporate more than 30% magnesium hydroxide in the composition. The composition preferably contains from 15 to 30% by weight and especially from 17 to 25% by weight magnesium hydroxide, based on the total (filled) weight of the material.

Polytetramethylene terephthalate is particularly preferred, as are polymers that contain polytetramethylene terephthalate units. The preferred polymeric material comprises
(1) a polyester in which at least 70 mole % of the repeating units are tetramethylene terephthalate; and
(2) a copolyester block copolymer having long-chain ester units of the general formula 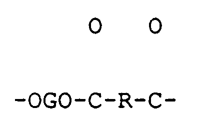 and short-chain ester unites of the formula 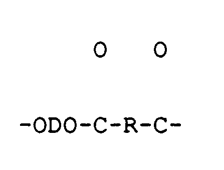 in which G is a divalent radical remaining after the removal of terminal hydroxyl groups from a (polyalkylene oxide) glycol, preferably a poly (C₂ to C₄ alkylene oxide) having a molecular weight of about 600 to 6000; R is a divalent radical remaining after removal of carboxyl groups from at least one dicarboxylic acid having a molecular weight of less than about 300; and D is a divalent radical remaining after removal of hydroxyl groups from at least one diol having a molecular weight less than 250.
   Preferred copolyesters are the polyether ester polymers derived from terephthalic acid, polytetramethylene ether glycol and 1,4-butane diol. These are random block copolymers having crystalline hard blocks with the repeating unit: 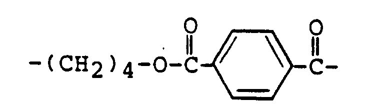 and amorphous, elastomeric polytetramethylene ether terephthalate soft blocks of repeating unit 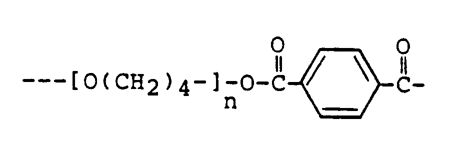 having a molecular weight of about 600 to 3000, i.e. n = 6 to 40.

The amount of polymer (2) preferably employed will depend on the balance needed, for the particular end use in view, between physical properties which are influenced by the presence of polymer (2).

Polymers (1) and (2) are preferably the only organic polymers in the composition. If other organic polymers are present, the amount thereof is preferably less than 20%, based on the combined weights of polymers (1) and (2).
Although by no means essential, it is possible and in many cases desirable for the polymeric material to include other fillers, for example additional flame retardants. In particular it may be desirable to incorporate a halogen containing flame retardant, for example decabromodiphenyl ether or ethylene-bis-tetrabromophthalimide, as well as other aromatic and aliphatic compounds.

The composition may contain a halogenated flame retardant.

Such halogenated flame retardants are known to generate large quantities of smoke, and the reduction in smoke obtained by using the particular magnesium hydroxide can be substantial. The amount of bromine-containing flame-retardant present will generally be at least 3%, preferably at least 5%, e.g. 5-30% or 5-25%, by weight of the composition. The bromine-containing flame retardants are frequently used in conjunction with inorganic flame retardants, for example antimony trioxide, which are known to demonstrate a synergistic effect with halogen-containing organic flame retardants. Thus preferred compositions contain 3 to 15% by weight of antimony trioxide. In other instances it may be desirable for the insulation to be substantially halogen-free in order to reduce the evolution of toxic gases during a fire, in which case other flame retardants e.g. those based on phosphorus derivatives may be used.

The insulation and jacketing materials used in the present invention preferably contain at least one antioxidant. Suitable antioxidants include the hindered phenols which are well known in the art, present for example in amount from 0.25 to 5% by weight of the composition.

The materials can also contain conventional additives such as other fillers, processing aids and stabilisers.

The insulation of jacketing materials may be used in their uncrosslinked form or may be crosslinked. They may be crosslinked by means of chemical cross-linking agents or by irradiation, for example by exposure to high energy radiation such as an electron beam or gamma rays. Radiation dosages in the range 2 to 80 Mrads, preferably 5 to 50 Mrads, e.g. 10 to 30 Mrads are in general appropriate.

For the purpose of promoting cross-linking during irradiation preferably from 0.2 to 5 weight per cent of a prorad such as a poly-functional vinyl or allyl compound, for example, triallyl cyanurate, triallyl isocyanurate or pentaerythritol tetramethacrylate are incorporated into the composition prior to irradiation.

The degree of cross-linking of the compositions may be expressed in terms of the gel content (ANSI/ASTM D2765-68) of the cross-linked polymeric composition, i.e. excluding non-polymeric additives that may be present. Preferably the gel content of the cross-linked composition is at least 10% more preferably at least 20%, e.g. at least 30%, more preferably at least 40%.

The materials are preferably used according to the invention as wire insulation, and especially as primary insulation for equipment wire although it is possible for other materials to be used as well, e.g. in dual-wall insulation, in which case the material may be used as a primary insulation or a primary jacket or both. Thus, for example, equipment wire may be provided with a primary insulation based on a polyolefin such as polyethylene or an olefin copolymer, an ionomer, an ethylene-vinyl acetate copolymer or blends thereof, and a primary jacket formed from a composition according to the present invention.

In the case of electrical wiring, the wire size is generally from 4 AWG to 38 AWG, preferably 10 to 30 AWG, and the coating has a thickness of 0.05 to 0.76 mm (0.002 to 0.030 inch) preferably 0.1 to 0.38 mm (0.004 to 0.0150 inch).

The invention is illustrated in the following Examples in which parts and percentages are by weight unless otherwise specified.

### Examples 1 to 6

Electrical wires were formed by extruding a 200 micrometre thick primary insulation onto a 20 AWG tinned copper conductor. The primary insulation was formed from the following composition.

| | Parts by weight |
|---|---|
| polybutylene terephthalate | 36 |
| Block copolymer comprising 87% by mole polytetramethylene terephthalate (hard blocks) and 13% by mole poly(polytetramethylene ether) terephthalate (soft blocks) having a flex modulus of about 208 MPa (30,000 p.s.i.) | 15 |
| ethylene bis-tetrabromophthalimide | 13 |
| magnesium hydroxide | 20 |
| antimony trioxide | 4 |
| phosphite antioxidant | 2 |
| phenolic antioxidant | 2 |
| hydrolysis stabilizer | 3 |
| triallyl isocyanurate cross-linking promotor (optional) | 5 |

Samples of wire were formed using different grades of magnesium hydroxide. The properties of the magnesium hydroxide are given in Table I.

**Table I**

| | Example | | | | | |
|---|---|---|---|---|---|---|
| | 1(comparison) | 2(comparison) | 3 | 4 | 5 | 6(comparison) |
| mean particle size (micrometres) | 3.0 | 2.5 | 2.0 | 0.60 | 0.7 | 0.8 |
| max particle size (micrometres) | 40 | 40 | - | 4 | 5 | 4 |
| specific surface area (m²kg⁻¹) | 22000 | 11800 | 35000 | 8500 | 8000 | 4300 |
| specific surface area/mean particle size mkg⁻¹x10¹⁰ | 0.73 | 0.472 | 1.75 | 1.42 | 1.14 | 0.54 |

The wires were tested for smoke generation according to specification UTE C20 452-1 and the values for maximum smoke density (Dmax) and cumulative smoke density after 4 minutes (VoF4) were recorded. The results are shown in Table II.

**Table II**

| Example | Dmax | VoF4 |
|---|---|---|
| 1 (comparison) | 141 | 338 |
| 2 (comparison) | 225 | 439 |
| 3 | 111 | 211 |
| 4 | 98 | 180 |
| 5 | 119 | 185 |
| 6 (comparison) | 215 | 522 |

### Examples 7 to 15 Examples 7-14 are for comparison only

A number of wires were formed by extruding a 200 micrometer thick primary insulation onto a 20 AWG tinned copper conductor. The wires had the composition given in Table III. For each Example one composition (having the suffix A) employed magnesium hydroxide as in Example 4 having a mean particle size of 0.6 micrometres and a specific surface area of 8500 m²kg⁻¹ (A/S ratio = 1.42 x 10¹⁰ mkg⁻¹), while the other composition (having a suffix B) employed magnesium hydroxide as in Example 6 having a mean particle size of 0.8 micrometers and a specific surface area of 4300 m²kg⁻¹ (A/S ratio 0.54 mkg⁻¹). The samples were tested to UTE C20 452-1 as in Example 1 and the results are given in Table IV from which it can be seen that while no improvement is seen using a high A/S ratio magnesium hydroxide in a polyethylene based insulation, a large reduction in both VoF4 and Dmax can be seen with a high A/S ratio magnesium hydroxide in a polyester based insulation (Example 15 A & B).

**TABLE III**

| Component | Example | | | | | | | | |
|---|---|---|---|---|---|---|---|---|---|
| | 7 | 8 | 9 | 10 | 11 | 12 | 13 | 14 | 15 |
| Low density polyethylene | 73.9 | 53.9 | 77.5 | 57.5 | 37.5 | | | | |
| Polybutylene terephthalate | | | | | | | | 51.5 | 37.8 |
| Polybutylene ether terephthalate block copolymer (As Examples 1-6) | | | | | | | | 23.7 | 17.6 |
| Polyphenylene oxide/polystyrene blend | | | | | | 77.5 | 57.5 | | |
| Polycarbodiimide | | | | | | | | 3.1 | 3.1 |
| ethylene-bis tetrabromophthalimide | | | 12.6 | 12.6 | 12.6 | 12.6 | 12.6 | 12.2 | 12.2 |
| antimony trioxide | | | 3.8 | 3.8 | 3.8 | 3.8 | 3.8 | 3.7 | 3.7 |
| magnesium hydroxide | 20 | 40 | | 20 | 40 | | 20 | | 20 |
| phenolic antioxidant | 1.8 | 1.8 | 1.8 | 1.8 | 1.8 | 1.8 | 1.8 | 1.7 | 1.7 |
| phosphite antioxidant | 0.9 | 0.9 | 0.9 | 0.9 | 0.9 | 0.9 | 0.9 | 0.9 | 0.9 |
| crosslinking promotor | 3.4 | 3.4 | 3.4 | 3.4 | 3.4 | 3.4 | 3.4 | 3.3 | 3.3 |

**TABLE IV**

| Example | Polymer | Bromine Flame Retardant | Mg(OH)₂ Content (%) | VoF₄ | Dmax |
|---|---|---|---|---|---|
| 7A | polyethylene | No | 20 | 20 | 14.5 |
| 7B | " | No | 20 | 14.5 | 14.5 |
| 8A | " | No | 40 | 21 | 20.5 |
| 8B | " | No | 40 | 18 | 15.5 |
| 9 | " | Yes | 0 | 177 | 132 |
| 10A | " | Yes | 20 | 212 | 143 |
| 10B | " | Yes | 20 | 183 | 138 |
| 11A | " | Yes | 40 | 143 | 208 |
| 11B | " | Yes | 40 | 119 | 190 |
| 12 | PPO/polystyrene | Yes | 0 | 310 | 205 |
| 13A | " | Yes | 20 | 233 | 247 |
| 13B | " | Yes | 20 | 320 | 251 |
| 14 | polyester | Yes | 0 | 674 | 273 |
| 15A | " | Yes | 20 | 127 | 74 |
| 15B | " | Yes | 20 | 291 | 218 |

## Claims

1. A transmission line having a layer of insulating or jacketing material that is formed from a composition including magnesium hydroxide, characterised in that the composition comprises :
(a) polytetramethylene teraphthalate containing polymers; and
(b) from 10 to 30% by weight based on the total weight of the composition of magnesium hydroxide, the magnesium hydroxide having a specific surface area A and a weight average particle size S such that the ratio of the specific surface area to the average particle size (A/S) is at least 8 x 10⁹ mkg⁻¹.

2. A line as claimed in claim 1, wherein the ratio of the specific surface area to the mean particle size of the magnesium hydroxide is at least 1.1 x 10¹⁰ mkg⁻¹.

3. A line as claimed in claim 2, wherein the ratio of the specific surface area to the mean particle size of the magnesium hydroxide is at least 1.2 x 10¹⁰ mkg⁻¹.

4. A line as claimed in any one of claims 1 to 3, wherein the magnesium hydroxide has weight average particle size in the range of from 0.1 to 20 micrometres.

5. A line as claimed in claim 4, wherein the magnesium hydroxide has a weight average particle size in the range of from 0.3 to 6 micrometres.

6. A line as claimed in any one of claims 1 to 5, wherein the magnesium hydroxide has a specific surface area in the range of from 1000 to 100,000 m²kg⁻¹.

7. A line as claimed in claim 6, wherein the magnesium hydroxide has a specific surface area in the range of from 5000 to 50000 m²kg⁻¹.

8. A line as claimed in any one of claims 1 to 7, wherein the insulating or jacketing material further comprises, a copolyester block copolymer having long chain ester units of the general formula 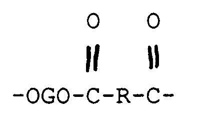 and short-chain ester units of the formula 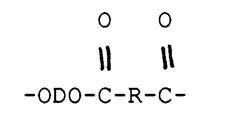 in which G is a divalent radical remaining after the removal of terminal hydroxyl groups from a polyalkylene oxide glycol, having a molecular weight of 600 to 6000; R is a divalent radical remaining after removal of carboxyl groups from at least one dicarboxylic acid having a molecular weight of less than 300; and D is a divalent radical remaining after removal of hydroxyl groups from at least one diol having a molecular weight less than 250.

9. A line as claimed in claim 8, wherein a copolyester block copolymer is derived from terephthalic acid, polytetramethylene ether glycol and 1,4-butane diol.

10. A line as claimed in any one of claims 1 to 9, in which the polymeric insulating material comprises a plurality of layers.

11. A line as claimed in any one of claims 1 to 10, which is substantially halogen-free and contains a flame retardant based on a phosphorous derivative.

12. A line as claimed in any one of claims 1 to 10, characterised in that the composition contains a halogenated flame retardant.

13. A line as claimed in claim 12, which includes from 5 to 30% by weight of bromine- containing flame retardant, based on the weight of the composition.

14. A line as claimed in 12 to 13, which includes antimony trioxide.

15. A line as claimed in any one of claims 1 to 14, which is an electrical wire.

## Patentansprüche

1. Übertragungsleitung, die eine Schicht aus Isolier- oder Ummantelungsmaterial hat, das aus einer Zusammensetzung gebildet ist, die Magnesiumhydroxid aufweist, dadurch gekennzeichnet, daß die Zusammensetzung folgendes aufweist:
(a) Polytetramethylenterephthalat enthaltende Polymere; und
(b) 10-30 Gew.-% Magnesiumhydroxid, bezogen auf das Gesamtgewicht der Zusammensetzung, wobei das Magnesiumhydroxid eine solche spezifische Oberfläche A und eine solche gewichtsbezogene mittlere Teilchengröße S hat, daß das Verhältnis der spezifischen Oberfläche zu der mittleren Teilchengröße (A/S) mindestens 8 x 10⁹ mkg⁻¹ ist.

2. Leitung nach Anspruch 1, wobei das Verhältnis der spezifischen Oberfläche zu der mittleren Teilchengröße des Magnesiumhydroxids mindestens 1,1 x 10¹⁰ mkg⁻¹ ist.

3. Leitung nach Anspruch 2, wobei das Verhältnis der spezifischen Oberfläche zu der mittleren Teilchengröße des Magnesiumhydroxids mindestens 1,2 x 10¹⁰ mkg⁻¹ ist.

4. Leitung nach einem der Ansprüche 1 bis 3, wobei das Magnesiumhydroxid eine gewichtsbezogene mittlere Teilchengröße im Bereich von 0,1-20 µm hat.

5. Leitung nach Anspruch 4, wobei das Magnesiumhydroxid eine gewichtsbezogene mittlere Teilchengröße im Bereich von 0,3-6 µm hat.

6. Leitung nach einem der Ansprüche 1 bis 5, wobei das Magnesiumhydroxid eine spezifische Oberfläche im Bereich von 1000-100.000 m²kg⁻¹ hat.

7. Leitung nach Anspruch 6, wobei das Magnesiumhydroxid eine spezifische Oberfläche im Bereich von 5000-50.000 m²kg⁻¹ hat.

8. Leitung nach einem der Ansprüche 1 bis 7, wobei das Isolier- oder Ummantelungsmaterial ferner ein Copolyesterblockcopolymer aufweist, das langkettige Estereinheiten der allgemeinen Formel 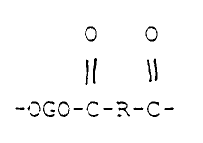 und kurzkettige Estereinheiten der Formel 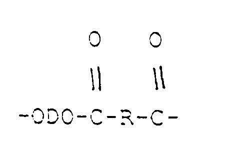 hat, wobei G ein zweiwertiger Rest ist, der nach Entfernen von endständigen Hydroxylgruppen von einem Polyalkylenoxidglykol mit einem Molekulargewicht von 600-6000 zurückbleibt; R ein zweiwertiger Rest ist, der nach Entfernen von Carboxylgruppen von mindestens einer Dicarbonsäure mit einem Molekulargewicht von weniger als 300 zurückbleibt; und D ein zweiwertiger Rest ist, der nach Entfernen von Hydroxylgruppen von mindestens einem Diol mit einem Molekulargewicht von weniger als 250 zurückbleibt.

9. Leitung nach Anspruch 8, wobei ein Copolyesterblockcopolymer von Terephthalsäure, Polytetramethylenetherglykol und 1,4-Butandiol abgeleitet ist.

10. Leitung nach einem der Ansprüche 1 bis 9, wobei das polymere Isoliermaterial eine Vielzahl von Schichten aufweist.

11. Leitung nach einem der Ansprüche 1 bis 10, die im wesentlichen halogenfrei ist und ein Flammschutzmittel auf der Basis eines Phosphorderivats enthält.

12. Leitung nach einem der Ansprüche 1 bis 10, dadurch gekennzeichnet, daß die Zusammensetzung ein halogeniertes Flammschutzmittel enthält.

13. Leitung nach Anspruch 12, die 5-30 Gew.-% bromhaltiges Flammschutzmittel, bezogen auf das Gewicht der Zusammensetzung, enthält.

14. Leitung nach den Ansprüchen 12 bis 13, die Antimontrioxid aufweist.

15. Leitung nach einem der Ansprüche 1 bis 14, die ein elektrischer Draht ist.

## Revendications

1. Conduit de transmission possédant une couche d'une matière isolante ou de chemisage qui est formée à partir d'une composition comprenant de l'hydroxyde de magnésium, caractérisé en ce que la composition comprend :
(a) des polymères contenant un polymère de téréphtalate de tétraméthylène ; et
(b) 10 à 30 % en poids, sur la base du poids total de la composition, d'hydroxyde de magnésium, l'hydroxyde de magnésium ayant une surface spécifique S et une moyenne pondérale du diamètre de particules D telles que le rapport de la surface spécifique au diamètre moyen de particules (S/D) soit au moins égal à 8 x 10⁹ mkg⁻¹.

2. Conduit suivant la revendication 1, dans lequel le rapport de la surface spécifique au diamètre moyen de particules de l'hydroxyde de magnésium est au moins égal à 1,1 x 10¹⁰ mkg⁻¹.

3. Conduit suivant la revendication 2, dans lequel le rapport de la surface spécifique au diamètre moyen de particules de l'hydroxyde de magnésium est au moins égal à 1,2 x 10¹⁰ mkg⁻¹.

4. Conduit suivant l'une quelconque des revendications 1 à 3, dans lequel l'hydroxyde de magnésium possède une moyenne pondérale du diamètre de particules comprise dans l'intervalle de 0,1 à 20 micromètres.

5. Conduit suivant la revendication 4, dans lequel l'hydroxyde de magnésium possède une moyenne pondérale du diamètre de particules comprise dans l'intervalle de 0,3 à 6 micromètres.

6. Conduit suivant l'une quelconque des revendications 1 à 5, dans lequel l'hydroxyde de magnésium possède une surface spécifique comprise dans l'intervalle de 1000 à 100 000 m²kg⁻¹.

7. Conduit suivant la revendication 6, dans lequel l'hydroxyde de magnésium possède une surface spécifique comprise dans l'intervalle de 5000 à 50 000 m²kg⁻¹.

8. Conduit suivant l'une quelconque des revendications 1 à 7, dans lequel la matière isolante ou de chemisage comprend en outre un copolymère séquencé consistant en copolyester possédant des motifs ester à chaîne longue de formule générale 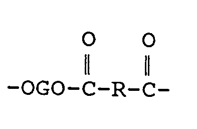 et des motifs ester à chaîne courte de formule 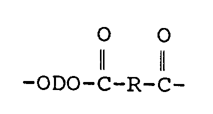 formules dans lesquelles G représente un radical divalent restant après élimination des groupes hydroxyle terminaux d'un polyalkylène-oxyde-glycol, ayant un poids moléculaire de 600 à 6000 ; R représente un radical divalent restant après élimination des groupes carboxyle d'au moins un acide dicarboxylique possédant un poids moléculaire inférieur à 300 ; et D représente un radical divalent restant après élimination des groupes hydroxyle d'au moins un diol ayant un poids moléculaire inférieur à 250.

9. Conduit suivant la revendication 8, dans lequel un copolymère séquencé du type copolyester est dérivé de l'acide téréphtalique, d'un polytétraméthylène-éther-glycol et de 1,4-butane-diol.

10. Conduit suivant l'une quelconque des revendications 1 à 9, dans lequel la matière isolante polymérique comprend plusieurs couches.

11. Conduit suivant l'une quelconque des revendications 1 à 10, qui est pratiquement dépourvu d'halogène et qui contient un retardateur de flamme à base d'un dérivé de phosphore.

12. Conduit suivant l'une quelconque des revendications 1 à 10, caractérisé en ce que la composition contient un retardateur de flamme halogéné.

13. Conduit suivant la revendication 12, qui comprend 5 à 30 % en poids d'un retardateur de flamme contenant du brome, sur la base du poids de la composition.

14. Conduit suivant les revendications 12 et 13, qui comprend du trioxyde d'antimoine.

15. Conduit suivant l'une quelconque des revendications 1 à 14, qui est un fil électrique.
